# EUROPEAN PATENT APPLICATION

(11) **EP 4 485 244 A1**
(43) Date of publication of application: **01.01.2025**
(21) Application number: 23315264.4
(22) Date of filing: 29.06.2023
(51) Int. Cl.: G06F 21/55, G06F 21/74, G06F 21/75, H04L 9/00

(54) **METHOD FOR PROTECTING AGAINST SOFTWARE-BASED SIDE CHANNEL ATTACKS AN ELECTRONIC SYSTEM COMPRISING A SECURE PROCESSOR AND AN INTEGRATED SENSOR**

(71) Applicant: THALES DIS FRANCE SAS, 92190 Meudon (FR)
(72) Inventor: Teglia, Yannick, 13720 BELCODENE (FR); Loubet, Moundi Philippe, 13600 LA CIOTAT (FR); Gravellier, Joseph, 12100 MILLAU (FR)
(74) Representative: Bricks, Amélie

(57) **Abstract**

The present invention relates to a method for protecting an electronic system (1) comprising a secure processor (102) and an integrated sensor (101) against software-based side channel attacks targeting said secure processor using said integrated sensor, said electronic system further comprising an untrusted processor (104), a sensor register (103) isolated from said untrusted processor for storing at least one output value of the integrated sensor, a blurring device (109) connected to the sensor register and configured for outputting at least one blurred sensor output value whose bits are at least partly blurred, and a memory mapped register (110) accessible by said untrusted processor and storing outputs of the blurring device, said method comprising:
- measuring, by the integrated sensor, a physical quantity representative of an activity of the secure processor to obtain a sensor output value,
- storing said sensor output value into said sensor register,
- generating, by said blurring device, from said sensor output value stored in the sensor register, a blurred sensor output value wherein one or more bits of said blurred sensor output value are blurred according to a blurring device configuration,
- storing said blurred sensor output value in said memory mapped register.

## Description

### FIELD OF THE INVENTION

The present invention relates to the field of chip protection against side attacks, and more particularly to a method, and a corresponding device, for protecting against software-based side channel attacks an electronic system comprising a secure processor and an integrated sensor.

### BACKGROUND OF THE INVENTION

Sensitive information, such as secret keys to be used in cryptographic algorithms are usually protected in order to prevent an access to it by an attacker, even when the attacker has full control of the device performing sensitive operations accessing such sensitive information. Nevertheless, algorithms performing these sensitive operations are subject to side-channel attacks (SCA), based on an analysis of traces from the device when performing the operation, such as power consumption or electromagnetic emissions. As an example, SCA may be used to retrieve at least of a part of a secret or private key when used in a cryptographic operation, such as an exponent of a modular exponentiation, or a scalar when used in the frame of an Elliptic curve cryptography (ECC) protocol, such as ECDSA.

In order to protect a processor performing sensitive operations against side channel analysis, it may be useful to analyze the side channel emissions of such a processor when it performs sensitive operations, in order to reduce or jam such emissions by improving the processor design or by embedding countermeasures against SCA.

Nevertheless, analyzing side channel emissions from outside a processor usually requires a sophisticated test-bed, which makes it both cumbersome and costly, and prevents large-scale analysis on multiple processors in parallel.

In order to make easier side channel analysis, side channel emission sensors may be integrated in the processor or in its vicinity, in a SoC for example. Such a solution makes it much easier to collect side channel traces during operation of the processor. Nevertheless, a drawback of such a solution is that such integrated sensors remain in place after the product comprising the processor has been released. In addition, modern processors use integrated power and temperature sensors for various reasons such as efficiency, security and reliability control. As a result, an attacker may use these sensors for performing his own side channel attack on the processor. Software-based Hardware Attacks (SbHWA) is a recent class of such side-channel attack that doesn't require any hardware as it uses sensors directly integrated in processors in order to eavesdrop the activity of victim applications. Such an attack does not require any laboratory equipment. Therefore, it makes remote hardware attacks possible. These attacks have been successfully conducted on various platforms such as SoC or FPGAs and demonstrate that it is possible to eavesdrop the power activity of an application using integrated sensor. [Joseph Gravellier, Jean-Max Dutertre, Yannick Teglia, and Philippe Loubet Moundi. 2021. SideLine: How Delay-Lines (May) Leak Secrets from Your SoC. In Constructive Side-Channel Analysis and Secure Design: 12th International Workshop, COSADE 2021, Lugano, Switzerland, October 25-27, 2021, Proceedings. Springer-Verlag, Berlin, Heidelberg, 3-30. https://doi.org/10.1007/978-3-030-89915-8_1]. Such attacks can be particularly useful for side channel attacks requiring a lot of data, such as Deep Learning based side channel attacks. Indeed, they may run in background for months or years without the victim application detecting that it's being spied on.

In addition, such integrated sensors are usually electrically connected to the processor in order to enable the processor to control their operation. It adds a physical connection to the processor, which increases the attack surface of the processor and may be leveraged by an attacker to bypass protections embedded in the processor.

Therefore, there is a need of a solution enabling to run side channel emission sensors in an electronic device for testing purposes, while preventing any further use of such sensors by an attacker for performing a side channel attack.

### SUMMARY OF THE INVENTION

For this purpose and according to a first aspect, this invention therefore relates to a method for protecting an electronic system comprising a secure processor and an integrated sensor against software-based side channel attacks targeting said secure processor using said integrated sensor, said electronic system further comprising an untrusted processor, a sensor register isolated from said untrusted processor for storing at least one output value of the integrated sensor, a blurring device connected to the sensor register and configured for outputting at least one blurred sensor output value whose bits are at least partly blurred, and a memory mapped register accessible by said untrusted processor and storing outputs of the blurring device, said method comprising :
- measuring, by the integrated sensor, a physical quantity representative of an activity of the secure processor to obtain a sensor output value,
- storing said sensor output value into said sensor register,
- generating, by said blurring device, from said sensor output value stored in the sensor register, a blurred sensor output value wherein one or more bits of said blurred sensor output value are blurred according to a blurring device configuration,
- storing said blurred sensor output value in said memory mapped register.

By doing so the output of the integrated sensor is blurred and can't be used for performing a side-channel attack.

The method according to the first aspect may comprise configuring said blurring device according to said blurring device configuration according to a control signal sent by a trusted entity through a wire.

It enables the control of the activation and the extent of the blurring from a trusted component, which prevents an attacker from deactivating the blurring at its own profit.

According to another embodiment, the method according to the first aspect may comprise configuring said blurring device according to said blurring device configuration by reading a configuration activation message carried into the physical quantity measured by the integrated sensor.

According to another embodiment, the method according to the first aspect may comprise configuring said blurring device according to said blurring device configuration by detecting, by said blurring device, a power consumption pattern in the physical quantity measured by the integrated sensor.

By doing, so there is no need anymore of a physical connection between the trusted entity and the blurring device, which is safer, for configuring the blurring performed by the blurring device.

Said physical quantity may be among a voltage, a frequency and a clock cycle.

The generation step of a blurred sensor output value may comprise modifying the low significant bits of the sensor output value.

By doing so, the blurred sensor output value still keeps a value close to its original value before blurring, which makes it still usable for legitimate purposes. And at the same time, its accuracy is decreased and made too low for using it for a side channel attack.

According to an embodiment, generating a blurred sensor output value may comprise discarding at least one bit of the sensor output value, the number of discarded bits depending on said blurring device configuration.

According to another embodiment, generating a blurred sensor output value may comprise applying a random masking to at least one bit of the sensor output value bits.

According to another embodiment, said sensor output value is encrypted before storing it in the sensor register and generating a blurred sensor output value may comprise decrypting at least one bit of the sensor output value stored in the sensor register, the number of decrypted bits depending on said blurring device configuration.

According to a second aspect, this invention also relates to a computer program product directly loadable into the memory of at least one computer, comprising software code instructions for performing the steps of the methods according to the first aspect when said product is run on the computer.

According to a third aspect, this invention relates to an electronic system configured for performing the steps of the methods according to the first aspect and comprising a secure processor, an integrated sensor, an untrusted processor, a sensor register isolated from said untrusted processor for storing at least one output value of the integrated sensor, a blurring device connected to the sensor register and configured for outputting at least one blurred sensor output value whose bits are at least partly blurred, and a memory mapped register accessible by said untrusted processor and storing output of the blurring device, wherein :
- the integrated sensor measures a physical quantity representative of an activity of the secure processor to obtain a sensor output value,
- said sensor output value is stored into said sensor register,
- said blurring device generates from said sensor output value stored in the sensor register, a blurred sensor output value wherein one or more bits of said blurred sensor output value are blurred according to a blurring device configuration,
- said blurred sensor output value is stored in said memory mapped register.

The integrated sensor may be a Time-to-Digital Converter sensor or a Ring-oscillator-based sensor configured for outputting a high resolution voltage output value.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an electronic system according to an embodiment of the present invention;
- Figure 2 is a schematic illustration of a method for protecting an electronic system comprising a secure processor and an integrated sensor against software-based side channel attacks targeting said secure processor using said integrated sensor according to an embodiment of the present invention;
- Figures 3 and 4 are schematic illustrations of an electronic system according to different embodiments of the present invention.

### DETAILED DESCRIPTION OF EMBODIMENTS OF THE INVENTION

According to a first aspect, the invention relates to an electronic system comprising a secure processor performing sensitive operations and which is therefore to be protected against side channel attacks.

Such an electronic system 1 may for example be a smartcard. Alternatively, it may be a System-on-Chip (SoC) comprising an integrated secure element, a secure enclave or an Hardware Security Module (HSM), such as SoCs used in smartphones or cards.

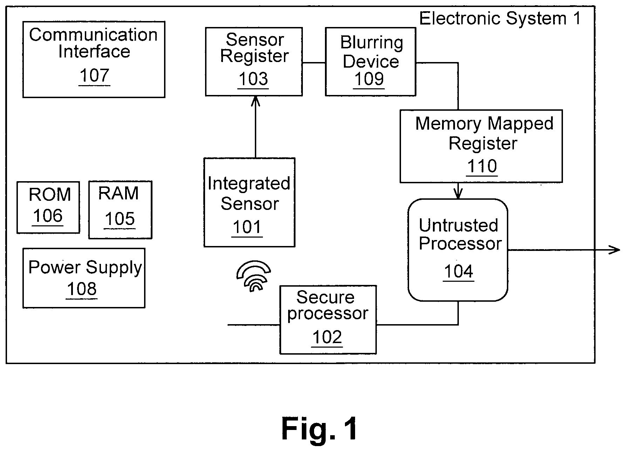

As described on **Figure 1**, such an electronic system 1 includes an integrated sensor 101 configured for monitoring side channel emissions of the secure processor 102 of the electronic system. Such an integrated sensor may for example be a voltage or current sensor monitoring the power consumption of the secure processor, or an electromagnetic sensor monitoring magnetic field variations resulting from operation of the secure processor, or a temperature sensor, or a circuit such as a Delay Line (DL), Delay Locked Loop (DLL) or Phase Locked Loop (PLL) which are all sensible to operations performed by the secure processor. As an example, it may be a Time-to-Digital Converter sensor or a Ring-oscillator-based sensor.

The electronic systems 1 also includes a sensor register 103 for storing the output values produced by the integrated sensor as a result of its measurements.

The integrated sensor may be electrically disconnected from the secure processor such that there is no wired connection between the secure processor and the integrated sensor, and no input interface at the secure processor from the integrated sensor, therefore preventing any injection of a malicious payload from the integrated sensor into the secure processor.

The electronic system 1 may further comprise an untrusted processor 104 which may be used to perform non-sensitive computations. This untrusted processor may be used for collecting measurements from the integrated sensor 101 and for analyzing it. When the electronic system is a SoC, such as a smartphone processor, the untrusted processor may be the main, unsecure, CPU of the chip, and the secure processor may be the integrated secure element iSE included in the chip.

The electronic system 1 may further comprise a random access memory (RAM) 105, a read-only memory (ROM) 106 and a communication interface 107. Such a communication interface may be used to connect the electronic system to various forms of wireless networks, e.g., wide-area networks, WiFi networks, or mobile telephony networks, or to wired networks such as Ethernet networks. The electronic system also comprises a power supply 108 supplying power to all the components of the electronic system.

The integrated sensor 101 enables to collect side channel emissions of the secure processor in a test phase, when the electronic system is being tested for example by its manufacturer, by a client or a certification authority. In such a test phase, it can be used for characterizing the resistance of the secure processor against side-channel attacks and for testing protections against such attacks already implemented in the electronic system.

In order to prevent an attacker from using it for performing a software-based side channel attack on the secure processor while the electronic system is being used on the field, the main idea according to the invention is to give the electronic system the capability to blur the outputs of the integrated sensor before passing it to the untrusted processor. Such a blurring at least lowers enough the accuracy of the measurements of the integrated sensor to make these measurements unsuitable for a side channel attack.

In order to perform such a blurring, the electronic system comprises a blurring device 109 and a memory mapped register 110. This blurring device is connected to the sensor register for reading from it the output values produced by the integrated sensor and it is configured for blurring these output values, at least partly, and outputting the result of this blurring as blurred sensor output value to the memory mapped register, for storage. Only the memory mapped register is made accessible to the untrusted processor, which therefore only has access to the blurred sensor output values.

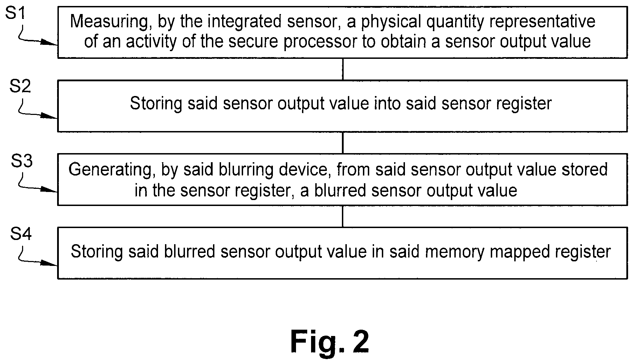

The next paragraphs will describe in more details the steps of a method for protecting the electronic system against software-based side channel attacks targeting the secure processor 102 using the integrated sensor 101 according to a second aspect of the invention, as depicted in **Figure 2****.**

In a first step S1, the integrated sensor measures a physical quantity representative of an activity of the secure processor. Such a physical quantity may for example be the voltage supplied to the sensor by the power supply, or the temperature of the secure processor. This measurement can be used as a measure of the side channel emissions of the secure processor. As a result of this measurement, the integrated sensor produces a sensor output value.

In a second step S2, the sensor output value is stored into the sensor register.

In a third step S3, the blurring device generates from the sensor output value stored in the sensor register a blurred sensor output value. One or more bits of this blurred sensor output value are blurred according to a blurring device configuration.

In a first embodiment, the blurring device generates from the sensor output value stored in the sensor register a blurred sensor output value by discarding at least one bit of the sensor output value. Bits may for example be discarded by setting them to a predefined value, 0 or 1, or by putting them in an error state. By doing so the information carried by the discarded bits is no longer present in the blurred sensor output value.

In a second embodiment, the blurring device generates from the sensor output value stored in the sensor register a blurred sensor output value by applying a random masking to at least one of the sensor output value bits. By doing so, the information originally carried by the bits of the sensor output value subject to masking is also absent from the blurred sensor output value.

In a third embodiment, the blurring device, at the second step S2, encrypts the sensor output value generated at the first step before storing it in the sensor register. Then, at the third step S3 the blurring device generates from the sensor output value stored in the sensor register a blurred sensor output value by decrypting at least one bit of the sensor output value stored in the sensor register. By doing so, only the decrypted bits are reverted to their meaningful value corresponding to the actual measurement of a physical value and the bits which remain encrypted in the blurred sensor output value don't bear any useful information for an attacker who would gain knowledge of their value.

Whatever the exact embodiment, the processing applied by the blurring device to the sensor output value may be applied to a varying number of bits of the sensor output value depending on a selected blurring device configuration.

In an embodiment, the bits of the sensor output value which are modified by the blurring, or not decrypted, are the low significant bits (LSB) of the sensor output value. These bits, also called least significant bits, are the bits on the right end of the sensor output value, as opposed to the most significant bits (MSB) located on the left end of the value. By doing so, the MSB bits of the sensor output value remain unchanged, which ensures the blurred value remains close to the original sensor output value; and at the same time, the LSB bits are blurred which prevents an attacker accessing the blurred sensor output value from retrieving a precise value of the measurement performed by the integrated sensor. The resolution of the value is decreased. The number of LSB bits to be blurred should be chosen such that the resolution of the values becomes low enough to prevent an attacker from using it efficiently in a side-channel attack.

The sensor output value may even be fully blurred by applying the discarding, or masking or no decryption to all the bits of the sensor output value.

If needed, the blurring of the sensor output value may be temporarily deactivated by discarding or masking no bit of the sensor output value, or by decrypting all the bits of the sensor output value.

The blurring device configuration may be chosen depending on the life cycle of the electronic system : is still under test at the factory or has it already been deployed on the field, for a client ? It can also depend on the way it is used for legitimate usage in the electronic system : for fault detection or integrity test for example. It may also depend on the level of trust granted to the components accessing the memory mapped register and on the sensitivity of the data handheld by the secure processor.

In a fourth step S4, the blurring device stores the blurred sensor output value in the memory mapped register. Since the memory mapped register is the only register storing data coming from the integrated sensor which is available to the unsecure processor, an attacker only has access to the blurred sensor output value stored in this register and has never access to the original sensor output value stored in the sensor register.

In order to set which processing is to be applied by the blurring device and to which bits of the sensor output value, the blurring device should be configured according to a blurring device configuration among a plurality of available such configurations.

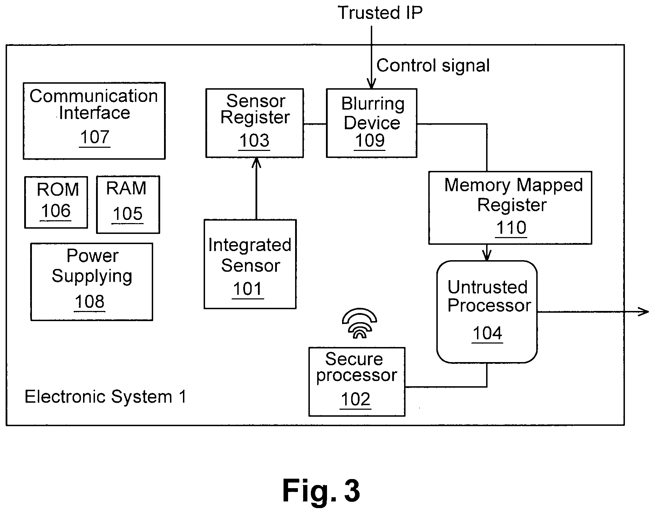

In a first embodiment as illustrated on Figure 3, such a configuration may be selected and applied according to a control signal sent by a trusted entity through a wire connected to the blurring device. Such a trusted entity may be the secure processor itself. Alternatively, it may be another trusted entity which is external to the electronic system, such as an online remote server or a secure diagnostic and debugging apparatus controlling the operation of the electronic system.

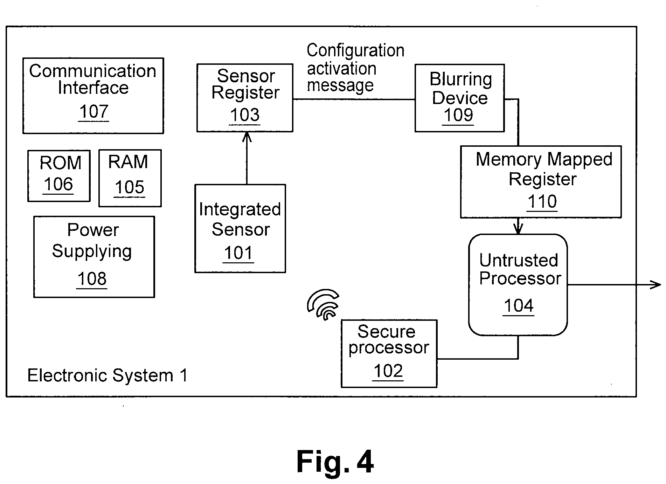

In another embodiment, as illustrated on Figure 4, the blurring device may determine which configuration should be applied by reading a configuration activation message carried into the physical quantity measured by the integrated sensor.

As an example, when the physical quantity measured by the sensor is power, the blurring device may detect a particular power consumption pattern in the power-related measurements performed by the integrated sensor.

According to a second aspect, this invention also relates to a computer program product directly loadable into the memory of at least one computer, comprising software code instructions for performing the steps of the methods described here above when said product is run on the computer.

According to a third aspect, this invention also relates to an electronic system 1 described here above and performing the steps of the methods described here above. This electronic system comprise a secure processor 102, an integrated sensor 101, an untrusted processor 104, a sensor register 103 isolated from said untrusted processor for storing at least one output value of the integrated sensor, a blurring device 109 connected to the sensor register and configured for outputting at least one blurred sensor output value whose bits are at least partly blurred, and a memory mapped register 110 accessible by said untrusted processor and storing output of the blurring device, wherein :
- the integrated sensor measures a physical quantity representative of an activity of the secure processor to obtain a sensor output value,
- said sensor output value is stored into said sensor register,
- said blurring device generates from said sensor output value stored in the sensor register, a blurred sensor output value wherein one or more bits of said blurred sensor output value are blurred according to a blurring device configuration,
- said blurred sensor output value is stored in said memory mapped register.

Consequently, such method, electronic system and computer program product enable to design an electronic system comprising integrated side-channel sensors monitoring a secure processor without making such integrated sensors a security weakness for the secure processor. An attacker is prevented from using it to attack the secure processor by a software-based side-channel attack, by making the measurements output by the integrated sensor unreadable or insufficiently accurate for using it as traces for a side channel attack.

## Claims

1. A method for protecting an electronic system (1) comprising a secure processor (102) and an integrated sensor (101) against software-based side channel attacks targeting said secure processor using said integrated sensor, said electronic system further comprising an untrusted processor (104), a sensor register (103) isolated from said untrusted processor for storing at least one output value of the integrated sensor, a blurring device (109) connected to the sensor register and configured for outputting at least one blurred sensor output value whose bits are at least partly blurred, and a memory mapped register (110) accessible by said untrusted processor and storing outputs of the blurring device, said method comprising :
- measuring (S1), by the integrated sensor, a physical quantity representative of an activity of the secure processor to obtain a sensor output value,
- storing (S2) said sensor output value into said sensor register,
- generating (S3), by said blurring device, from said sensor output value stored in the sensor register, a blurred sensor output value wherein one or more bits of said blurred sensor output value are blurred according to a blurring device configuration,
- storing (S4) said blurred sensor output value in said memory mapped register.

2. The method of claim 1, comprising configuring said blurring device according to said blurring device configuration according to a control signal sent by a trusted entity through a wire.

3. The method of claim 1 or 2, comprising configuring said blurring device according to said blurring device configuration by reading a configuration activation message carried into the physical quantity measured by the integrated sensor.

4. The method of any one of claims 1 to 3, comprising configuring said blurring device according to said blurring device configuration by detecting, by said blurring device, a power consumption pattern in the physical quantity measured by the integrated sensor.

5. The method of any one of claims 1 to 4, wherein said physical quantity is among a voltage, a frequency and a clock cycle.

6. The method of claim 5, wherein generating a blurred sensor output value (S3) comprises modifying the low significant bits of the sensor output value.

7. The method of any one of claims 1 to 6, wherein generating a blurred sensor output value (S3) comprises discarding at least one bit of the sensor output value, the number of discarded bits depending on said blurring device configuration.

8. The method of any one of claims 1 to 6, wherein generating a blurred sensor output value (S3) comprises applying a random masking to at least one bit of the sensor output value bits.

9. The method of any one of claims 1 to 6, wherein said sensor output value is encrypted before storing it in the sensor register and wherein generating a blurred sensor output value (S3) comprises decrypting at least one bit of the sensor output value stored in the sensor register, the number of decrypted bits depending on said blurring device configuration.

10. A computer program product directly loadable into the memory of at least one computer, comprising software code instructions for performing the steps of any one of claim 1 to 9 when said product is run on the computer.

11. An electronic system (1) comprising a secure processor (102), an integrated sensor (101), an untrusted processor (104), a sensor register (103) isolated from said untrusted processor for storing at least one output value of the integrated sensor, a blurring device (109) connected to the sensor register and configured for outputting at least one blurred sensor output value whose bits are at least partly blurred, and a memory mapped register (110) accessible by said untrusted processor and storing output of the blurring device,
wherein :
- the integrated sensor measures a physical quantity representative of an activity of the secure processor to obtain a sensor output value,
- said sensor output value is stored into said sensor register,
- said blurring device generates from said sensor output value stored in the sensor register, a blurred sensor output value wherein one or more bits of said blurred sensor output value are blurred according to a blurring device configuration,
- said blurred sensor output value is stored in said memory mapped register.

12. The electronic system of claim 11, wherein the integrated sensor (101) is a Time-to-Digital Converter sensor or a Ring-oscillator-based sensor configured for outputting a high resolution voltage output value.

13. The electronic system of claim 10 or 11 configured for performing the steps of any one of claim 1 to 9.
